# EUROPEAN PATENT SPECIFICATION

(11) **EP 4 697 926 B1**
(45) Date of publication and mention of the grant of the patent: **11.11.2026**
(21) Application number: 24729047.1
(22) Date of filing: 14.05.2024
(51) Int. Cl.: A01B 39/18, A01M 21/02, A01B 63/00, A01B 79/00

(54) **WEED-CONTROL UNIT**
UNKRAUTBEKÄMPFUNGSGERÄT
UNITÉ DE CONTRÔLE DES MAUVAISES HERBES

(30) Priority: 17.05.2023 GB 202307369
(43) Date of publication of application: 25.02.2026
(73) Proprietor: Garford Farm Machinery Ltd, Peterborough, Cambridgeshire PE6 8RP (GB)
(72) Inventor: GARFORD, Michael, Peterborough, Cambridgeshire PE6 8RP (GB); GARFORD, Philip, Peterborough, Cambridgeshire PE6 8RP (GB); OKOH, Gideon, Peterborough, Cambridgeshire PE6 8RP (GB); TREVARTHEN, Nigel, Peterborough, Cambridgeshire PE6 8RP (GB)
(74) Representative: Holbrook, Robert Iain
(86) International application number: PCT/GB2024/051253
(87) International publication number: WO 2024/236290

(56) References cited:
- CN-A- 101 878 700
- CN-A- 105 009 716
- CN-A- 111 066 386
- CN-A- 114 097 320
- CN-Y- 201 345 802
- IT-A1- 201800 006 719
- PL-B1- 239 730

## Description

### Field

The present invention relates to a weed-control unit. CN 111066386 A discloses such a device.

### Summary

According to a first aspect of the present invention there is provided a weed-control unit. The weed-control unit comprises an arcuate blade which curves along a circular path around an axis and which is rotatably moveable around the axis. The weed-control unit comprises an actuator and a linkage mechanism to convert motion of the actuator into motion of the arcuate blade around the axis.

This can help to reduce soil throw and/or energy required to move the blade between first and second angular positions (for example, one in which the blade is out of the ground and another in which the blade is inserted into the ground) as the weed-control unit moves in a direction of travel.

The arcuate blade may project in a plane perpendicular to the axis. Thus, the leading edge of the blade can run perpendicular to the intended direction of travel. The arcuate blade may project in a plane which is inclined to the axis. Thus, the leading edge of the blade can be inclined to the intended direction of travel.

The actuator may be a linear actuator, for example, a linear brushless motor. The actuator may be a rotary actuator.

The mechanism may be a multi-bar linkage. The multi-bar linkage may comprise a plurality of rotational pivots, and a plurality of links connecting the pivots. The mechanism may comprise a rocker, wherein the blade is attached to the rocker. The mechanism may comprise a rotatable arm arranged such that raising or lowering the arm causes the arm to swing outwardly or inwardly, respectively.

The mechanism may be a sliding mechanism. The sliding mechanism comprises a rail, and a slider configured to run along the rail. The blade may be attached to the slider.

The arcuate blade may have an angular length of between 20 and 90°.

The mechanism may be adjustable so as change lateral position of the blade.

According to a second aspect of the present invention there is provided a weed-control apparatus comprising a chassis moveable over ground in a direction of travel and at least one weed-control unit supported by the chassis for controlling weeds in the ground.

The weed-control apparatus may further comprise a control system for controlling the operation of the at least one weed-control unit. The control system may be arranged for closed loop control of the at least one actuator.

The at least some of the weed control units may be arranged in pairs so as to work each of two sides of a crop row in the ground. The weed control units in a pair may be offset along the direction of travel.

The weed-control apparatus may further comprise a crop plant location system for identifying respective locations of crop plants, and a control system for controlling operation of at least the weed control units in dependence upon the locations of the crop plants. The crop plant location system may comprise an imaging system. The crop plant location system may comprise a global positioning system receiver. The control system may be arranged for closed loop control of the at least one actuator.

According to a third aspect of the present invention there is provided a system comprising a tractor and the weed-control apparatus coupled to the tractor.

According to a fourth aspect of the present invention there is provided a weed-control autonomous vehicle comprising a motive power unit, and the weed-control apparatus.

According to a fifth aspect of the present invention there is provided a method of weed control, the method comprising, while travelling over ground, at least partially inserting an arcuate blade into the ground, wherein the blade curves along a circular path around an axis and which is rotatably moveable around the axis, by means of a linkage mechanism converting the motion of an actuator into motion of the arcuate blade, wherein rotatably moving the blade in a first sense causes insertion of the arcuate blade into the ground, and, thereafter, at least partially withdrawing the arcuate blade from the ground, wherein rotatably moving the blade in a second, opposite sense causes withdrawal of the arcuate blade from the ground.

### Brief Description of the Drawings

Certain embodiments of the present invention will now be described, by way of example, with reference to the accompanying drawings, in which:
Figure 1 is a perspective view of a weeding implement;
Figure 2 schematically illustrates a weeding tool;
Figure 3 illustrates a pair of weeding tools;
Figures 4A, 4B and 4C are perspective views of a first weeding tool;
Figures 5A, 5B and 5C are side views of a first weeding tool at different points during weeding;
Figure 6 is a perspective view of a pair of second weeding tools;
Figure 7 is an end elevation of the pair of weeding tools shown in Figure 6;
Figure 8 is a perspective view of a second weeding tool shown in Figure 6 with a cover removed;
Figure 9 is another perspective view of a second weeding tool shown in Figure 6 with a cover removed;
Figures 10A, 10B and 10C are side views of a second weeding tool at different points during weeding;
Figure 11 is a perspective view of a blade of the second weeding tool;
Figure 12 is an end elevation of the blade of the second weeding tool shown in Figure 11;
Figures 13A, 13B and 13C are side views of a second weeding tool at different points during weeding;
Figures 14A, 14B and 14C are side views of first, second and third blades, respectively;
Figures 15A, 15B and 15C are top views of first, second and third blades, respectively;
Figure 16 is an end view of the first, second and third blades;
Figure 17 is a perspective view of an array of a third weeding tools;
Figure 18 is another perspective view of the array shown in Figure 17;
Figure 19 is an end elevation of the array of the third weeding tools shown in Figure 17;
Figure 20 is perspective view of a pair of first weeding tools in which part of the mechanism is mounted in a first position;
Figure 21 is an end elevation of the pair of first weeding tools shown in Figure 20 in three different positions;
Figure 22 is perspective view of a pair of first weeding tools in which part of the mechanism is mounted in a second position;
Figure 23 is an end elevation of the pair of first weeding tools shown in Figure 22;
Figure 24 is schematic block diagram of weeding implement control system; and
Figure 25 illustrates operation of the weeding implement.

### Detailed Description of Certain Embodiments

### System overview

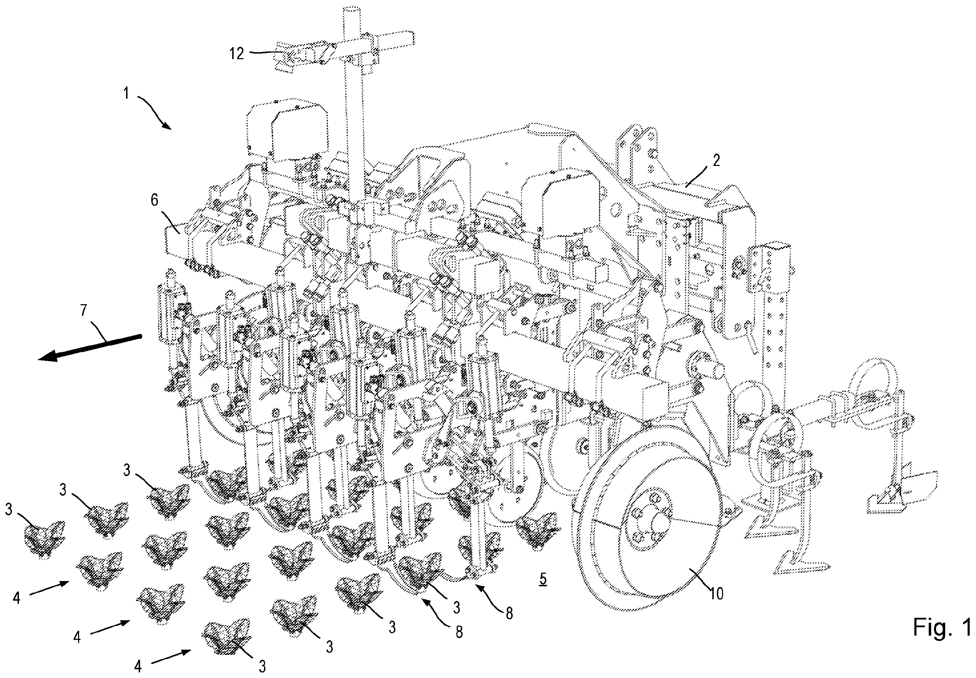

Referring to Figure 1, a tractor-mountable weed-control implement 1 (herein also referred to as a "weed-control apparatus" or "weeding system") is shown which is mountable to the front of a tractor (not shown) using a linkage unit 2, such as a side shift unit or other row-following system. The weed-control apparatus 1 can be used to weed or thin vegetable, root, cereal, salad or any other crop 3 planted in rows 4 in the ground 5.

The weed-control apparatus 1 comprises a chassis 6 (which may be referred to as a "frame", "transport carriage" or simply "carriage") which is moveable over ground in an intended direction of travel 7. The carriage 6 supports an array of weeding units 8 (or "weeding tools" or "weeders") that destroy weeds (not shown) by uprooting, displacing and/or cutting the weeds. Each weeding unit 8 is attached to the carriage 6 at a respective point of attachment 9. The apparatus 1 may include a pair of disc steer units 10 for guiding and levelling the apparatus 1.

The weeding system 2 may be of an in-row (or "intra-row") type capable of weeding between crop plants 3 in a row 4.

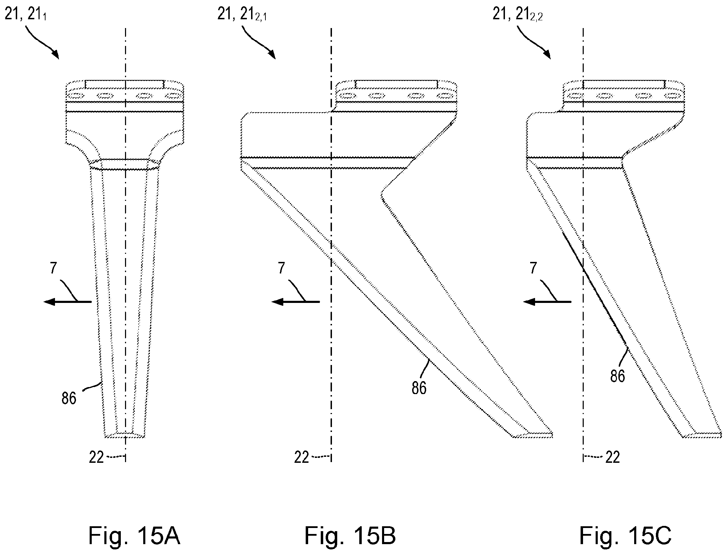

An imaging system 11 (Figure 15) employing one or more image sensors 12 (for example, a colour-depth camera) and a control system 13 (Figure 15) can be used to control the weeding units 8. The imaging system 11 helps identify the positions of crop plants stems centres. Accurate positioning of crop plant stems centres can allow the weeding units 8 to weed more closely to the crop plants 3 while avoiding damaging the crop. An imaging system 11 need not be used. Instead, a GPS receiver may be used to locate the position of crop plants 3, the positions of which may be stored in a database (not shown).

### Weeding unit

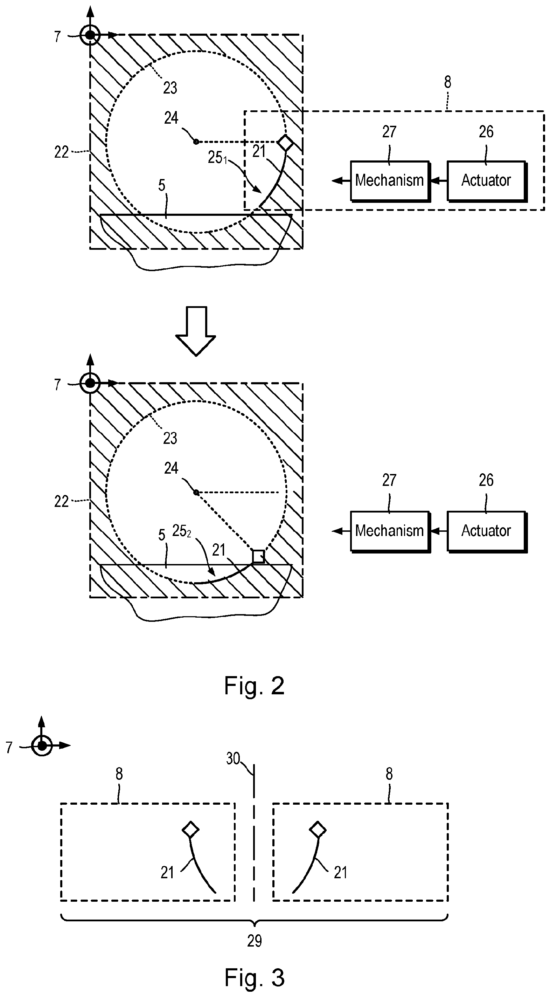

Referring to Figure 2, each weeding unit 8 comprises an arcuate blade 21 which curves in a plane 22 transverse (for example, perpendicular) to the direction of travel 7 along a circular path 23 around an axis 24. The arcuate blade 21 is rotatably moveable in the plane 22 along the circular path 23 with the axis 24 as its axis of rotation between first and second angular positions 25₁, 25₂. Thus, the blade 21 moves following its own arcuate shape. In the first position 25₁, the blade 21 is out of the ground 5 and, in the second position 25₂, the blade 21 is in the ground 5. The blade 21 is driven by an actuator 26 via a mechanism 27, such as linkage mechanism or a sliding mechanism.

The blade 21 may lie in the plane 22 in which it curves. Thus, the blade 21 substantially lies and moves in the arc of a circle around a centre point. The blade 21 may, however, be swept (*i.e.,* project forward or backward from the plane). Thus, the blade 21 traces a helical path on a cylinder defined by the circle, and moves in the arc of the circle. A swept blade can help to reduce soil throw in the direction of travel.

Referring also to Figure 3, weeding units 8 are preferably arranged in pairs 29, offset along the direction of travel 7, and orientated such that the blades 21 move inwardly towards a central plane 30. As will be explained in more detail later, the central plane 30 may be aligned with the centre of the row 4 and a pair 29 of weeding units may be able to work a row 4 from both sides of the row.

As explained hereinbefore, the blade 21 is driven by an actuator 26 via a mechanism 27. Two types of weeding unit, each type using a different mechanism, will initially be described. A third type of weeding unit will be described later.

### First type of weeding unit

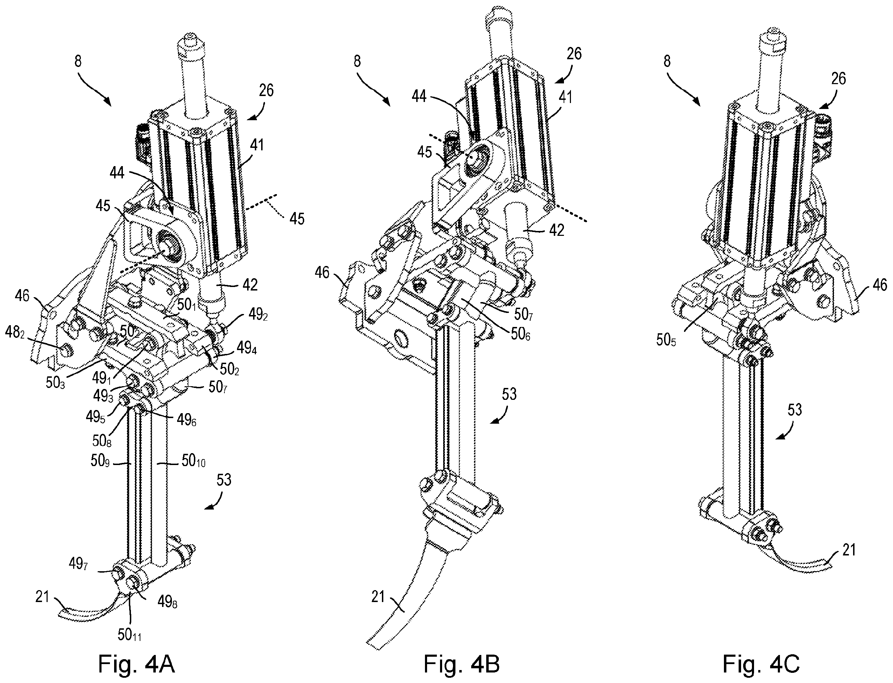

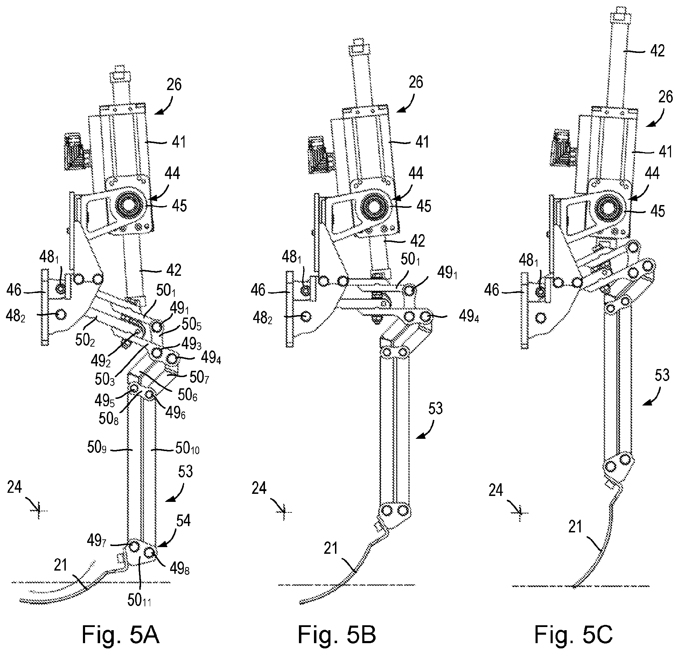

Referring to Figures 4A to 4C and Figures 5A to 5C, a first type of weeding unit 8 is shown.

The weeding unit 8 employs a linear actuator 26 and a mechanism 27 in the form of a multi-bar linkage to convert motion (for example, linear motion) of the actuator 26 into arcuate motion of the blade 21 tracing the circular path 23 (Figure 2).

The actuator 26 comprises a housing 41 and a moveable rod 42 which is generally vertically oriented. The actuator 26 takes the form of a brushless linear motor, although other forms of actuator, such as a pneumatic or hydraulic cylinder (or "piston"), can be used.

The housing 41 of the actuator 26 is held by an arm 43 of a hinge pivot 44 to afford the actuator 26 the ability to pivot along an axis 45 transverse to the direction of travel 7. The hinge pivot 44 is coupled to the point of attachment 9 via a bracket 46.

The multi-bar linkage 27 comprises a plurality of rotational pivots 48, 49 (or "joints") and links 50, 51 connecting the pivots 48, 49.

The bracket 46 supports first and second fixed pivots 48₁, 48₂ which are vertically spaced apart.

The first, upper fixed pivot 48₁ is connected to a first intermediate pivot 49₁ via a first, multi-part link 50₁. The second, lower intermediate pivot 48₂ is connected to a second intermediate pivot 49₂ via a second link 50₂. The first and second intermediate pivots 49₁, 49₂ which are vertically spaced apart. The second intermediate pivot 49₂ is connected to third and fourth intermediate pivots 49₃, 49₄ via a third link 50₃ arranged as a ternary link. The first intermediate pivot 49₁ is connected to the third pivot 49₃ via a fifth link 50₅.

The arm 42 provides an input link which is connected to the second pivot 49₂. Thus, extending and retracting the arm 42 causes the first, second, third and fourth links 50₁, 50₂, 50₃, 50₄ to be lowered and raised, pivoted about the first and second fixed pivots 48₁, 48₂.

The third and fourth intermediate pivots 49₃, 49₄ are connected to fifth and sixth intermediate pivots 49₅, 49₆ via sixth and seventh links 50₆, 50₇, respectively. The fifth and sixth intermediate pivots 49₅, 49₆ are connected by an eighth link 50₈ arranged as a binary link providing a first rocker. The eight link 50₈ may be omitted.

The fifth and intermediate pivots 49₅, 49₆ are connected to seventh and eight pivots 49₇, 49s by ninth and tenth links 50₉, 50₁₀, respectively. The fifth and sixth intermediate pivots 49₅, 49₆ are connected by an eleventh link 50₁₁ arranged as a binary link providing a second rocker. The ninth and tenth links 50₉, 50₁₀ are offset in the direction of travel and generally form a leg 53 between the first and second rockers 50s, 50₁₁ with a distal end 54.

The blade 21 is attached to the second rocker 50₁₁. Thus, extending and retracting the arm 42 causes not only the ninth and tenth links 50₉, 50₁₀ to be lowered and raised, but also rotation of the first and second rockers 50s, 50₁₁. In particular, relative vertical movement between the ninth and tenth links 50₉, 50₁₀ causes rotation of the second rocker 50₁₁ and the blade 21.

### Second type of weeding unit

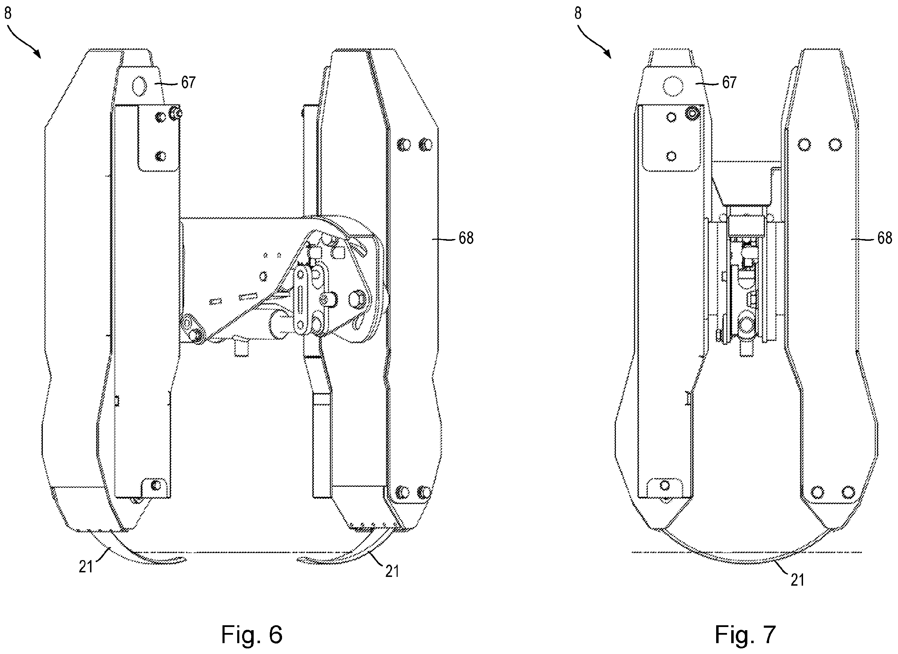

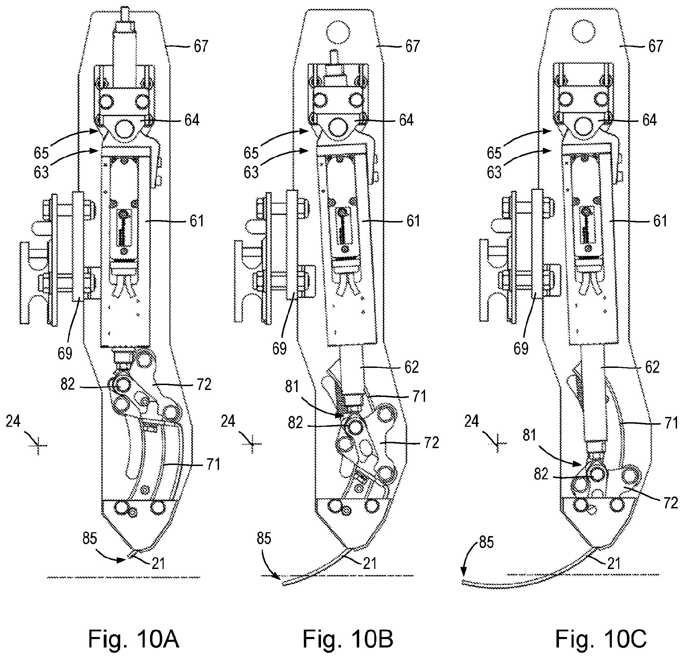

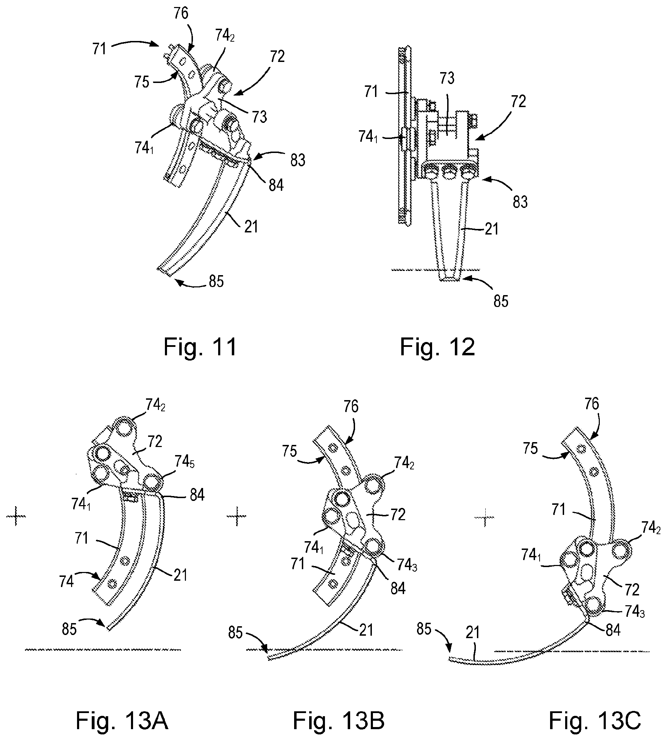

Referring to Figures 6 to 13C, a second type of weeding unit 8 is shown.

The weeding unit 8 employs a linear actuator 26 and a mechanism 27 in the form of a curved linear guide to convert linear motion of the actuator 26 into arcuate motion of the blade 21 tracing the circular path 23 (Figure 2).

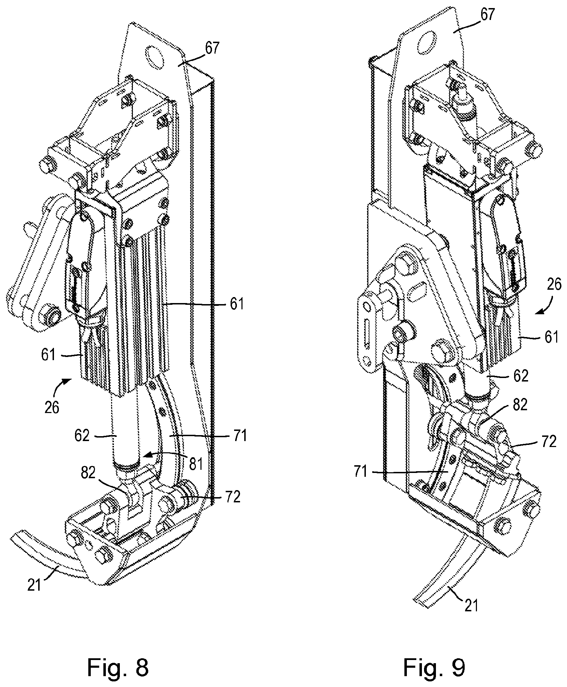

Referring in particular to Figures 8 and 9, the actuator 26 comprises a housing 61 and a moveable rod 62 which is generally vertically oriented. The actuator 26 takes the form of a brushless linear motor, although other forms of actuator, such as a pneumatic or hydraulic cylinder (or "piston"), can be used.

An upper end 63 of the housing 61 of the actuator 26 is held by an arm 64 of a hinge pivot 65 to afford the actuator 26 the ability to pivot along an axis 66 perpendicular to the direction of travel 7. The hinge pivot 65 is coupled to an elongate plate 67 which forms part of a weeding unit housing 68. The plate 67 is provided with a bracket 69 which is mounted to the point of attachment 9.

The curved linear guide mechanism 27 comprises a rail 71 and a slider 72 (or "carriage") configured to run along the rail 71. In this example, the rail 71 is an arcuate rail which is an arc of a circle. The slider 72 comprises a main portion 73 supporting a set of wheels 74₁, 74₂, 74₃ with at least one wheel arranged on each side 75, 76 of the rail 71. In this case, there are three wheels 74, a first wheel 74₁ disposed on an inner side 75 of the rail 71 and second and third wheels 74₂, 74₃ disposed on the outer side 76.

A distal end 81 of the rod 62 Is attached by a rotational pivot 82 (or "joint") to the carriage 72. At its proximal end 83, the blade 21 has an elbow 84 via which the blade is rigidly attached to the carriage 72. Thus, when the rod 62 extends downwardly, the carriage 72 runs arcuately along the rail 71 and generally downwardly, and when the rod 62 retracts upwardly, the carriage 72 runs arcuately along the rail 71 and generally upwardly. A third type of weeding unit 8 will be described hereinafter.

### Blade shape

The blade 21 may be straight sideways (or "non-swept") or non-perpendicular (or "swept"). Expressed differently, the blade 21 has a leading edge which may be perpendicular or inclined to the intended direction of travel 7.

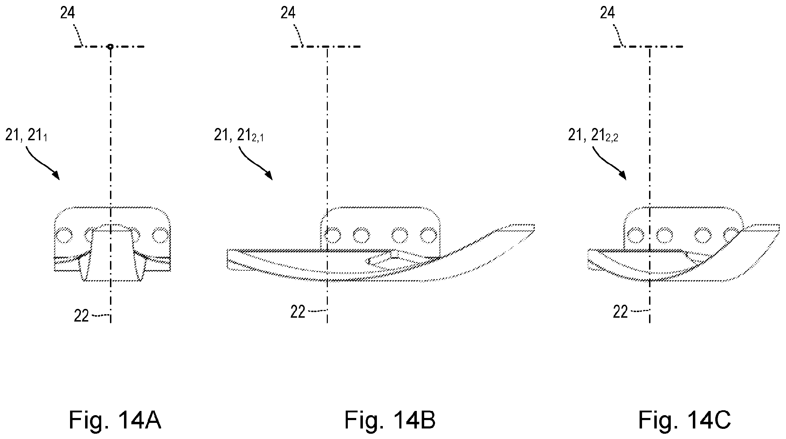

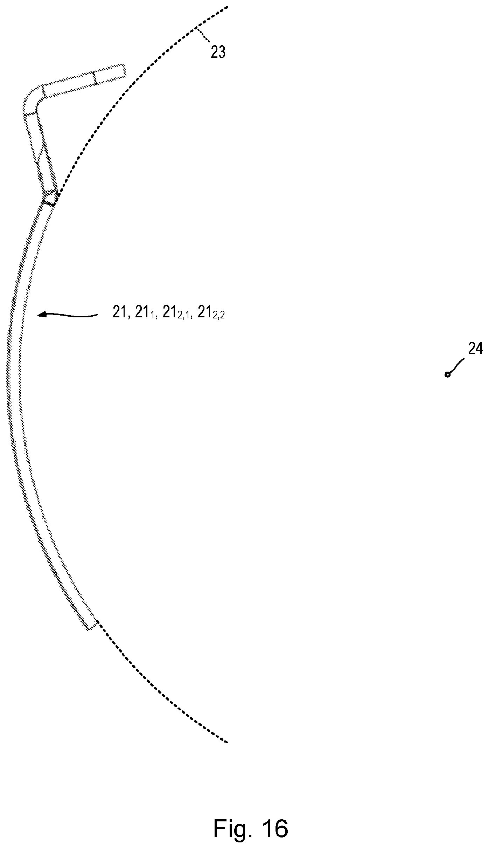

Referring to Figures 14A, 14B, 14C, 15A, 15B, 15C and 16, first and second types of blades 21₁, 21_{2,1}, 21_{2,2} are shown.

Referring in particular to Figure 14A, 15A and 16, the first type of blade 21₁ is straight sideways (herein also referred to as "in-plane", "non-swept" or "perpendicular"). Thus, the blade 21₁ generally lies in the plane 22 in which it curves. The blade 21₁ thus has a shape which is an arc of a circle 23 centred on a point on the axis 24 and the blade 21 moves along a (larger) arc of the circle, around the axis 24.

Referring in particular to Figure 14B, 15B and 16, a first example of the second type of blade 21_{2,1} is swept (or "inclined" or "non-perpendicular"). The blade 21_{2,1} has a shape of a circular helix (that is, a helix with constant radius), defined by the circle and moves in the arc of the circle. The second type of blade 21_{2,1} generally project backwards from the plane 22, away from the direction of travel 7. In the first example, the leading edge 86 of the blade 21_{2,1} is inclined by about 45° with respect to the plane 22. Thus, the blade 21_{2,1} traces a helical path on a cylinder defined by the circle, and moves in the arc of the circle.

Referring to Figure 14C, 15C and 16, a second example of the second type of blade 21_{2,1} is swept. The second example is similar to the first example, but the leading edge 86 is inclined by about 30° with respect to the plane 22.

A swept blade 21_{2,1}, 2_{2,2} can help to reduce soil throw in the direction of travel 7.

Referring in particular to Figure 15, the first and second types of 21₁, 21_{2,1}, 21_{2,2} have the same curvature and so lie on the circle 23 and share the same axis 24.

### Weeding unit arrangement

Referring again to Figure 2, the first and second types of weeding unit 8 can be arranged such the blades 21 move in a plane 22 perpendicular to the direction of travel 7. The first and second types of weeding units 8, may, however, be angled away from perpendicular (for example, within 10°).

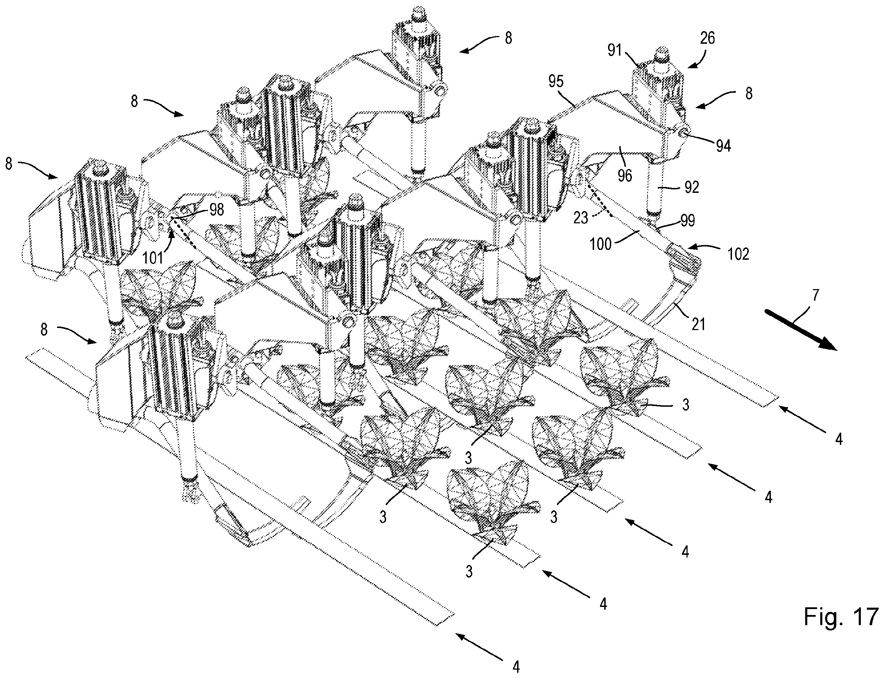

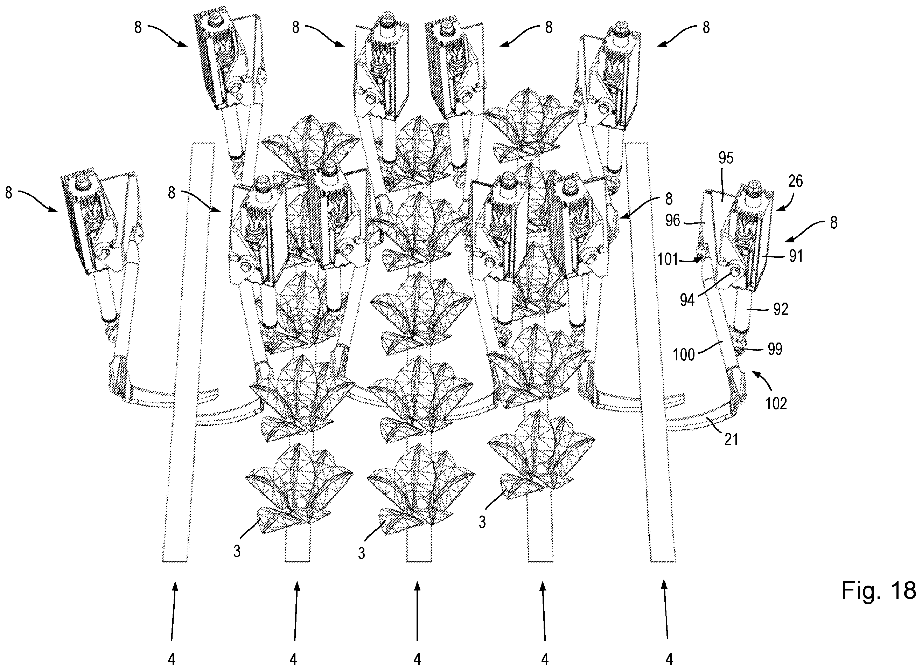

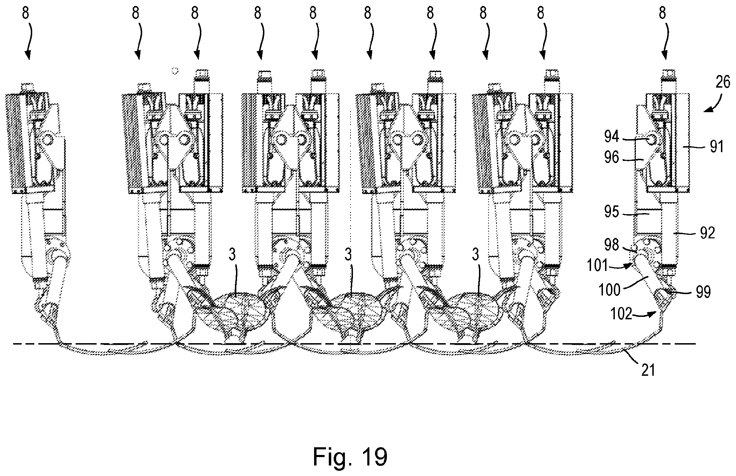

Referring to Figures 17, 18 and 19, an arrangement of a third type of weeding unit 8 is shown. In this arrangement, the weeding units 8 are angled away from perpendicular. Put differently, the weeding units 8 are rotated about their vertical axis with respect to the rows 4.

The weeding unit 8 employs a linear actuator 26 and a mechanism 27 in the form of a two-bar linkage to convert motion of the actuator 26 into arcuate motion of the blade 21 tracing the circular path 23 (Figure 2).

The actuator 26 comprises a housing 91 and a moveable rod 92 which is generally vertically oriented. The actuator 26 takes the form of a brushless linear motor, although other forms of actuator, such as a pneumatic or hydraulic cylinder (or "piston"), can be used.

The housing 91 of the actuator 26 is held by an arm 93 of a hinge pivot 94 to afford the actuator 26 the ability to pivot along an axis transverse to the direction of travel 7. The hinge pivot 94 is attached to a mounting plate 95 via a bracket 96.

The two-bar linkage 27 comprises rotational pivots 98, 99 (or "joints") and a link 100 connecting the pivots 98, 99.

In particular, the two-bar linkage 27 includes an arm (or rod) 100 having first and second opposite ends 101, 102. The arm 100 is mounted in such a way to be inclined and is tilted outwardly with respect to the row 4.

The first end 101 of the arm 100 is attached to a rotation pivot 98 which is attached to the plate 95. The pivot 98 rotates about the axis 23 which defines the circular path about the blade 21 curves and also around which it rotates. The blade 21 is fixedly attached, for example using bolts, to the second end 102 of the arm. The moveable rod 92 is attached by an intermediate rotational pivot 99 to the arm 100 between the first and second ends 101, 102. Thus, extending and retracting the arm 92 causes the arm 100 to swing downwards and upwards respectively, causing rotation of the blade 21.

Although the third type of weeding unit 8 uses a simpler mechanism, the first and second types of weeding unit 8 are able to provide greater clearance from the crop.

### Mounting

Referring to again to Figure 1, weeding units 8 can staggered (or "stacked") between the front and back of the carriage 6 so that the weeding units 8 do not interfere. In other words, each weeding unit 8 in a pair can be offset along the direction travel 7. This arrangement can also help to reduce the lateral spacing of the weeding units 8, allowing weeding of narrow crop rows, even down to 200 mm rows or narrower.

Furthermore, the weeding units 8 can be adjusted to suit the row spacing.

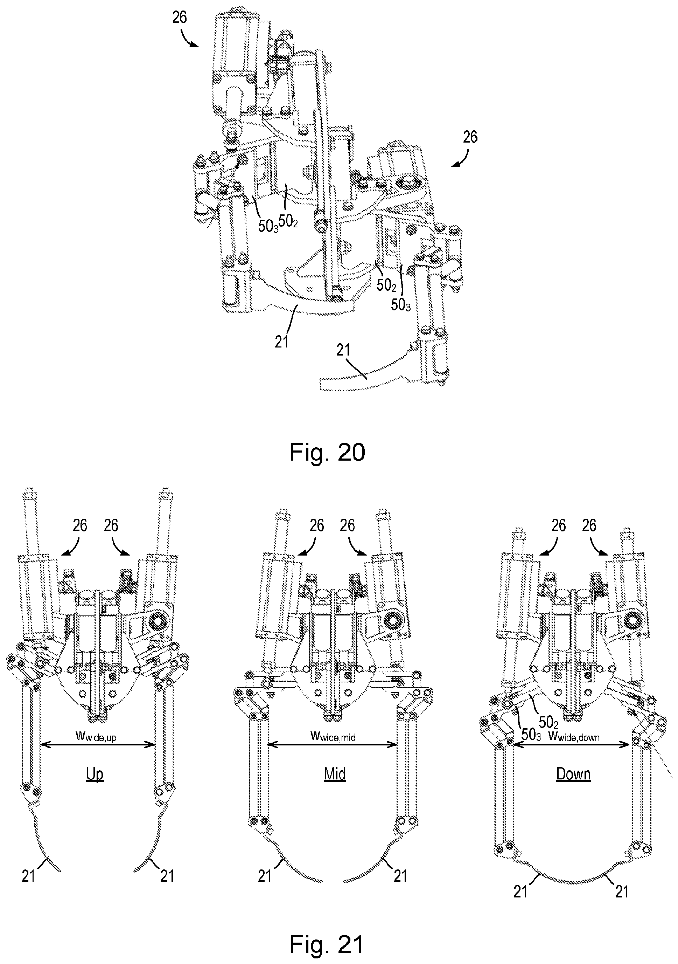

Referring to Figures 20, 21, 22 and 23, first and second weeding unit arrangements are shown.

Referring to Figures 20 and 21, the second and third links 50₂, 50₃ are fixedly attached, for example using two bolts, so that there is a relatively small degree of overlap between the second and third links 50₂, 50₃. This increases the distance between the legs in a pair. In this arrangement, relatively long blades 21 are used.

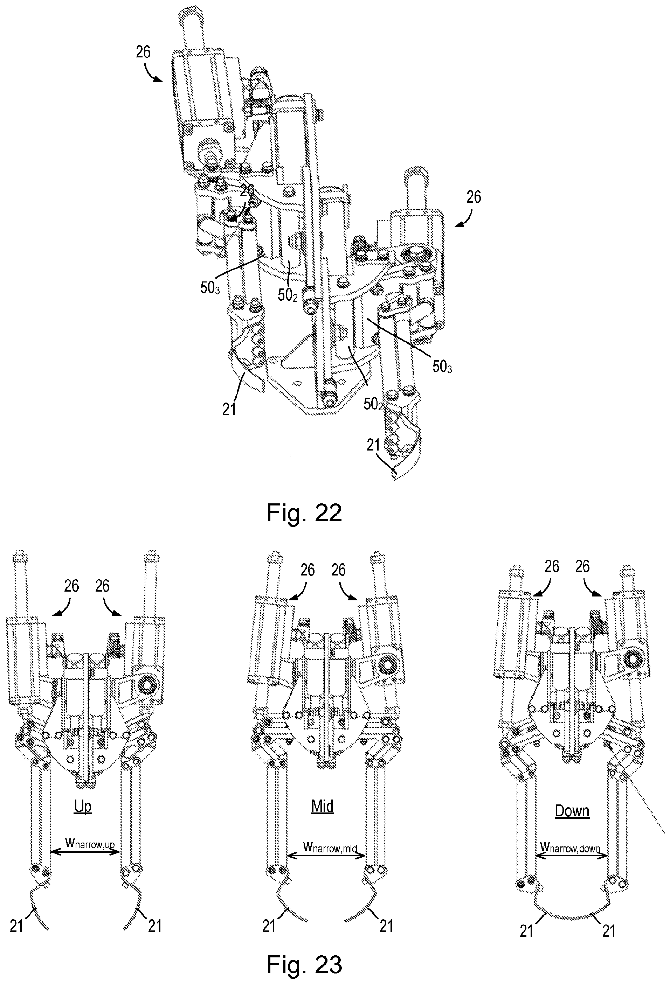

Referring to Figures 22 and 23, the second and third links 50₂, 50₃ are fixedly attached, so that there is a relatively large degree of overlap between the second and third links 50₂, 50₃. This reduces the distance between the legs in a pair. In this arrangement, relatively short blades 21 are used.

### Control

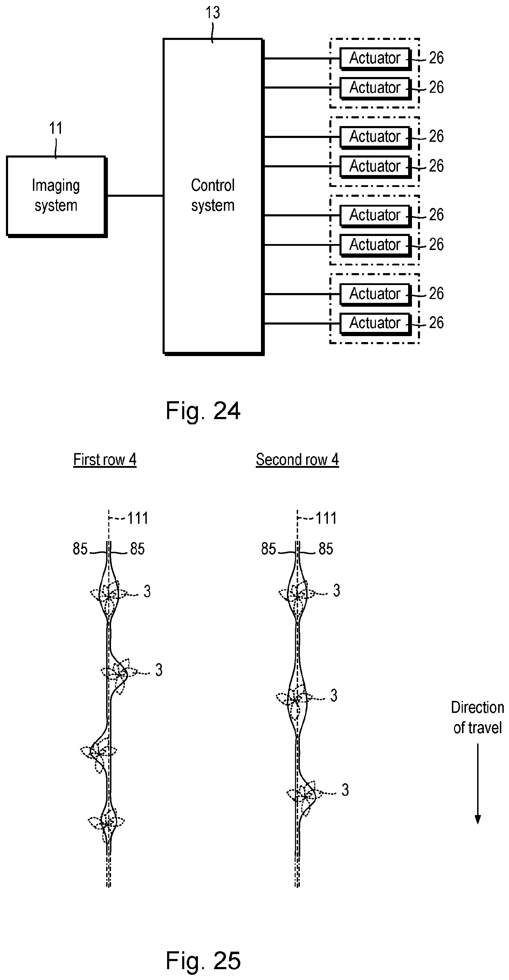

Referring to Figure 24, the actuators 26 are controlled by a control system 13. The control system 13 may take the form of processor-based system running suitable software.

As explained earlier, weeding units 8 are preferably arranged in pairs 29 (Figure 3) and each weeding unit 8 can be operated independently of other units 8.

### Operation

Referring also to Figure 25, the imaging system 11 (or other suitable system, such as a GPS receiver) is used to identify the positions of crop plants 3, *e.g.,* the position of plant stems, in each row 4₁, 4₂ of crop plants 3, as the weed-control implement 1 (Figure 1) travels. A suitable imaging system 11 is disclosed in WO 2023/021303 A1.

The control system 13 receives the positions of the crop plants 3 from the imaging system 11 and causes or energises the actuators 26 so as to vary the degree of insertion of the blades 26.

Actuators 26 can employ open loop control. However, some types of actuators 26, such as the brushless linear motor, can benefit from closed loop control, for example, closed loop control of position and/or closed loop control of speed.

If closed loop control is used, then the actuators 26 can be controlled more precisely (for example, speed of movement can be controlled) which can reduce soil throw and/or provide finer, variable control of insertion.

The control system 13 may control whether a blade 21 is deployed depending on the position of a crop plant 3, for example, relative to a centre line 111.

The weeding units 8 may be configured such that the distal tip 85 of the blade 21 crosses the centre line 111. For example, the blade 21 length and the position of the blade 21 can be set so that the blade overlap by, for example, 20 to 60 mm.

Figure 26 shows how the position of the distal tip 85 of a blade 21 may vary.

Generally, one or both blades 21 are deployed to cut through the soil 5 between crop plants in the same row 4. A blade 21, however, is retracted so as not to cut through crop plants 5.

Where a crop plant 5 sits on or close to the centre line 111, both blades 21 (that is, on both sides of the crop plant) are sufficiently withdrawn to avoid the plant 3. Where a crop plant 5 sits to one side of the centre line 111, the blade 21 on that side is withdrawn. The blade 21 on the other side may or may not be withdrawn. When a blade 21 is withdrawn, the blade may be wholly withdrawn from the soil 5.

### Modifications

The actuator need not be a linear actuator, but can be, for example, a rotary actuator.

The weed control implement may be mountable to the rear or the front of a tractor or autonomous vehicle (or "robot").

A combination of different mechanisms may be used. For example, a combination of sliding mechanism and a linkage mechanism may be used.

The weed control implement can be used to thin a crop, in other words, to remove crop plants which by virtue of their position need to be destroyed or removed.

## Claims

1. A weed-control unit (8), comprising:
· an arcuate blade (21) which curves along a circular path (23) around an axis (24) and which is rotatably moveable around the axis;
· an actuator (26); and
· a linkage mechanism to convert motion of the actuator into motion of the arcuate blade around the axis.

2. The weed-control unit (8) of claim 1, wherein the arcuate blade (21) projects in a plane perpendicular to, or is inclined to, the axis.

3. The weed-control unit (8) of claim 1 or 2, wherein the actuator (26)is one of:
a linear actuator;
a linear brushless motor; or
a rotary actuator.

4. The weed-control unit (8) of claim 1, wherein the mechanism (27) is a multi-bar linkage which may optionally comprise:
· a plurality of rotational pivots (48, 49); and
· a plurality of links (50) connecting the pivots.

5. The weed-control unit (8) of claim 1 or 4, wherein the mechanism, comprises:
· a rocker, wherein the blade (21) is attached to the rocker.

6. The weed-control unit (8) of claim 1, wherein the mechanism comprises:
· a rotatable arm arranged such that raising or lowering the arm causes the arm to swing outwardly or inwardly, respectively.

7. The weed-control unit (8) of claim 1, wherein the mechanism is a sliding mechanism, the mechanism optionally comprising:
· a rail (71); and
· a slider (72) configured to run along the rail,
wherein, optionally, the blade (21) is attached to the slider (72).

8. The weed-control unit (8) of any one of claims 1 to 7, wherein the arcuate blade (21) has an angular length of between 20 and 90°.

9. A weed-control apparatus (1) comprising:
· a chassis (6) moveable over ground in a direction of travel;
· at least one weed-control unit (8) of any one of claims 1 to 8 supported by the chassis for controlling weeds in the ground; and, optionally,
· a control system (16) for controlling operation of the at least one weed-control unit; or
· a crop plant location system for identifying respective locations of crop plants; and
· a control system for controlling operation of at least the weed control units in dependence upon the locations of the crop plants.

10. The weed-control apparatus (1) of claim 9, wherein the control system (16) is arranged for closed loop control of the at least one actuator (26).

11. The weed-control apparatus (1) of claim 9 or 10, wherein at least some of the weed control units (8) are arranged in pairs (29) so as to work each of two sides of a crop row (4) in the ground (5).

12. The weed-control apparatus of claim 9, wherein the crop plant location system comprises an imaging system or a global positioning system receiver.

13. A system, comprising:
· a tractor; and
· weed-control apparatus (1) of any one of claims 9 to 12 coupled to the tractor.

14. A weed-control autonomous vehicle, comprising:
· a motive power unit; and
· weed-control apparatus (1) of any one of claims 9 to 12.

15. A method of weed control, the method comprising:
while travelling over ground (5):
· at least partially inserting an arcuate blade (21) into the ground, wherein the blade curves along a circular path around an axis (24) and which is rotatably moveable around the axis, by means of a linkage mechanism converting the motion of an actuator into motion of the arcuate blade, wherein rotatably moving the blade in a first sense causes insertion of the arcuate blade into the ground; and
· thereafter, at least partially withdrawing the arcuate blade from the ground, wherein rotatably moving the blade in a second, opposite sense causes withdrawal of the arcuate blade from the ground.

## Patentansprüche

1. Unkrautbekämpfungseinheit (8), umfassend:
▪ eine bogenförmige Klinge (21), die sich entlang einer Kreisbahn (23) um eine Achse (24) krümmt und die drehbar um die Achse bewegbar ist;
▪ einen Aktuator (26); und
▪ einen Verknüpfungsmechanismus, um die Bewegung des Aktuators in eine Bewegung der bogenförmigen Klinge um die Achse umzuwandeln.

2. Unkrautbekämpfungseinheit (8) nach Anspruch 1, wobei die bogenförmige Klinge (21) in einer Ebene, die zu der Achse senkrecht oder geneigt ist, vorsteht.

3. Unkrautbekämpfungseinheit (8) nach Anspruch 1 oder 2, wobei der Aktuator (26) einer von Folgenden ist:
ein Linearaktuator;
ein bürstenloser Linearmotor; oder
ein Drehaktuator.

4. Unkrautbekämpfungseinheit (8) nach Anspruch 1, wobei der Mechanismus (27) eine Mehrstabverknüpfung ist, die optional Folgendes umfassen kann:
▪ eine Vielzahl von Drehzapfen (48, 49); und
▪ eine Vielzahl von Verbindungsgliedern (50), welche die Zapfen verbindet.

5. Unkrautbekämpfungseinheit (8) nach Anspruch 1 oder 4, wobei der Mechanismus Folgendes umfasst:
▪ eine Schwinge, wobei die Klinge (21) an der Schwinge angebracht ist.

6. Unkrautbekämpfungseinheit (8) nach Anspruch 1, wobei der Mechanismus Folgendes umfasst:
▪ einen drehbaren Arm, der so angeordnet ist, dass ein Anheben oder Absenken des Arms bewirkt, dass der Arm nach außen beziehungsweise nach innen schwenkt.

7. Unkrautbekämpfungseinheit (8) nach Anspruch 1, wobei der Mechanismus ein Gleitmechanismus ist, wobei der Mechanismus optional Folgendes umfasst:
▪ eine Schiene (71); und
▪ einen Gleiter (72), der dazu konfiguriert ist, entlang der Schiene zu laufen,
wobei die Klinge (21) optional an dem Gleiter (72) angebracht ist.

8. Unkrautbekämpfungseinheit (8) nach einem der Ansprüche 1 bis 7, wobei die bogenförmige Klinge (21) eine Winkellänge zwischen 20 und 90° aufweist.

9. Unkrautbekämpfungsvorrichtung (1), umfassend:
▪ ein Gestell (6), das über dem Boden in einer Fahrtrichtung bewegbar ist;
▪ mindestens eine Unkrautbekämpfungseinheit (8) nach einem der Ansprüche 1 bis 8, die durch das Gestell gestützt wird, zur Bekämpfung von Unkräutern im Boden; und optional
▪ ein Steuerungssystem (16) zum Steuern des Betriebs der mindestens einen Unkrautbekämpfungseinheit; oder
▪ ein Kulturpflanzenortungssystem zum Identifizieren jeweiliger Standorte von Pflanzen; und
▪ ein Steuerungssystem zum Steuern des Betriebs mindestens der Unkrautsteuereinheiten in Abhängigkeit von den Standorten der Kulturpflanzen.

10. Unkrautbekämpfungsvorrichtung (1) nach Anspruch 9, wobei das Steuerungssystem (16) zur Regelung des mindestens einen Aktuators (26) mit geschlossenem Kreis angeordnet ist.

11. Unkrautbekämpfungsvorrichtung (1) nach Anspruch 9 oder 10, wobei mindestens einige der Unkrautbekämpfungseinheiten (8) in Paaren (29) angeordnet sind, um jede von zwei Seiten einer Pflanzenreihe (4) in dem Boden (5) zu bearbeiten.

12. Unkrautbekämpfungsvorrichtung nach Anspruch 9, wobei das Kulturpflanzenortungssystem ein Bildgebungssystem oder einen Globalpositionierungssystemempfänger umfasst.

13. System, umfassend:
▪ einen Traktor; und
▪ eine Unkrautbekämpfungsvorrichtung (1) nach einem der Ansprüche 9 bis 12, die mit dem Traktor gekoppelt ist.

14. Autonomes Fahrzeug zur Unkrautbekämpfung, umfassend:
▪ eine Antriebsleistungseinheit; und
▪ eine Unkrautbekämpfungsvorrichtung (1) nach einem der Ansprüche 9 bis 12.

15. Verfahren zur Unkrautbekämpfung, wobei das Verfahren Folgendes umfasst:
während eines Fahrens über den Boden (5):
▪ mindestens teilweises Einführen einer bogenförmigen Klinge (21) in den Boden, wobei sich die Klinge entlang einer Kreisbahn um eine Achse (24) krümmt und die drehbar um die Achse bewegbar ist, mittels eines Verknüpfungsmechanismus, der die Bewegung eines Aktuators in eine Bewegung der bogenförmigen Klinge umwandelt, wobei ein drehendes Bewegen der Klinge in einem ersten Richtungssinn das Einführen der bogenförmigen Klinge in den Boden bewirkt; und
▪ danach mindestens teilweises Zurückziehen der bogenförmigen Klinge aus dem Boden, wobei ein drehendes Bewegen der Klinge in einem zweiten, entgegengesetzten Richtungssinn ein Zurückziehen der bogenförmigen Klinge aus dem Boden bewirkt.

## Revendications

1. Unité de contrôle des mauvaises herbes (8), comprenant :
▪ une lame arquée (21) qui s'incurve le long d'un trajet circulaire (23) autour d'un axe (24) et qui est mobile de manière à pouvoir tourner autour de l'axe ;
▪ un actionneur (26) ; et
▪ un mécanisme de liaison pour convertir le mouvement de l'actionneur en mouvement de la lame arquée autour de l'axe.

2. Unité de contrôle des mauvaises herbes (8) de la revendication 1, ladite lame arquée (21) faisant saillie dans un plan perpendiculaire à l'axe ou étant inclinée par rapport à celui-ci.

3. Unité de contrôle des herbes (8) de la revendication 1 ou 2, ledit actionneur (26) étant un parmi :
un actionneur linéaire ;
un moteur linéaire sans balai ; ou
un actionneur rotatif.

4. Unité de contrôle des mauvaises herbes (8) de la revendication 1, ledit mécanisme (27) étant une liaison multibarre qui peut éventuellement comprendre :
▪ une pluralité de pivots rotatifs (48, 49) ; et
▪ une pluralité de liaisons (50) reliant les pivots.

5. Unité de contrôle des mauvaises herbes (8) de la revendication 1 ou 4, ledit mécanisme comprenant :
▪ une bascule, ladite lame (21) étant fixée à la bascule.

6. Unité de contrôle des mauvaises herbes (8) de la revendication 1, ledit mécanisme comprenant :
▪ un bras rotatif agencé de sorte que l'élévation ou l'abaissement du bras amène le bras à pivoter respectivement vers l'extérieur ou vers l'intérieur.

7. Unité de contrôle des mauvaises herbes (8) de la revendication 1, ledit mécanisme étant un mécanisme coulissant, ledit mécanisme comprenant éventuellement :
▪ un rail (71) ; et
▪ une glissière (72) conçue pour courir le long du rail, ladite lame (21) étant éventuellement fixée à la glissière (72).

8. Unité de contrôle des mauvaises herbes (8) de l'une quelconque des revendications 1 à 7, ladite lame arquée (21) possédant une longueur angulaire comprise entre 20 et 90°.

9. Appareil de contrôle des mauvaises herbes (1), comprenant :
▪ un châssis (6) mobile sur le sol suivant une direction de déplacement ;
▪ au moins une unité de contrôle des mauvaises herbes (8) de l'une quelconque des revendications 1 à 8 supportée par le châssis pour contrôler les mauvaises herbes dans le sol ; et, éventuellement,
▪ un système de commande (16) pour commander le fonctionnement de l'au moins une unité de contrôle des mauvaises herbes ; ou
▪ un système de localisation de plantes cultivées pour identifier des emplacements respectifs de plantes cultivées ; et
▪ un système de commande pour commander le fonctionnement d'au moins les unités de contrôle des mauvaises herbes en fonction des emplacements des plantes cultivées.

10. Appareil de contrôle des herbes (1) de la revendication 9, ledit système de commande (16) étant agencé pour la commande en boucle fermée de l'au moins un actionneur (26).

11. Appareil de contrôle des mauvaises herbes (1) de la revendication 9 ou 10, au moins certaines des unités de contrôle des mauvaises herbes (8) étant agencées en paires (29) de façon à travailler chacun des deux côtés d'une rangée de cultures (4) dans le sol (5).

12. Appareil de contrôle des mauvaises herbes de la revendication 9, ledit système de localisation des plantes cultivées comprenant un système d'imagerie ou un récepteur de système mondial de positionnement.

13. Système, comprenant :
▪ un tracteur ; et
▪ un appareil de contrôle des mauvaises herbes (1) de l'une quelconque des revendications 9 à 12 couplé au tracteur.

14. Véhicule autonome de contrôle des mauvaises herbes, comprenant :
▪ une unité de puissance motrice ; et
▪ appareil de contrôle des mauvaises herbes (1) de l'une quelconque des revendications 9 à 12.

15. Procédé de contrôle des mauvaises herbes, le procédé comprenant : pendant un déplacement au sol (5) :
▪ l'insertion au moins partielle d'une lame arquée (21) dans le sol, la lame s'incurvant le long d'un trajet circulaire autour d'un axe (24) et qui est mobile de manière à pouvoir tourner autour de l'axe, au moyen d'un mécanisme de liaison convertissant le mouvement d'un actionneur en mouvement de la lame arquée, ledit mouvement rotatif de la lame dans un premier sens entraînant l'insertion de la lame arquée dans le sol ; et
▪ ensuite, le retrait au moins partiel de la lame arquée du sol, ledit mouvement de rotatif de la lame dans un second sens opposé entraînant le retrait de la lame arquée du sol.
